# EUROPÄISCHE PATENTSCHRIFT

(11) **EP 0 702 016 B1**
(45) Veröffentlichungstag und Bekanntmachung des Hinweises auf die Patenterteilung: **07.08.2002**
(21) Anmeldenummer: 95110232.6
(22) Anmeldetag: 30.06.1995
(51) Int. Cl.: C07F 7/18, C09D 7/12

(54) **Zusammensetzungen erhältlich durch Zugabe von tertiären Aminen zu Acryloxypropylalkoxysilanen, Verfahren zu deren Herstellung und deren Verwendung**
Compositions obtainable by the addition of tertiary amine to acryloxypropylalkoxysilanes, process for their preparation and their use
Compositions obtenables par addition d'amine tertiaire à des acryloxypropylalkoxysilanes, procédé pour leur préparation et leur utilisation

(30) Priorität: 30.08.1994 DE 4430729
(43) Veröffentlichungstag der Anmeldung: 20.03.1996
(73) Patentinhaber: Degussa AG, 40474 Düsseldorf (DE)
(72) Erfinder: Haas, Margret, D-53639 Königswinter (DE); Bernhardt, Günther, Dr., D-53757 St. Augustin (DE)

(56) Entgegenhaltungen:
- EP-A- 0 267 698
- US-A- 3 258 477
- US-A- 5 258 063
- POSSNY G.; KOERNER G. MAKROMOLEKULARE CHEM. Bd. 73, 1964, Seiten 85 - 108

## Beschreibung

Acryloxypropylalkoxysilane sind wichtige Ausgangsstoffe für die Herstellung siliciumhaltiger Lacke und Farben (*EP-PS 0 324 747 und EP-PS 0 267 698*), u. a. das 3-Methacryloxypropyl-trimethoxysilan. Häufig spielt der pH-Wert dieser Silane bei der Herstellung und Zubereitung von Lacken und Farben sowie für die Lagerfähigkeit der Lacke und Farben eine entscheidende Rolle. Es besteht in der Fachwelt ein Bedarf an Acryloxypropylalkoxysilanen mit einem pH-Wert von ca. 5 bis 6.

Die nach unterschiedlichen Produktionsverfahren (US 3 258 477, US 4 946 977, US 5 117 027) herstellbaren Acryloxypropylalkoxysilane weisen Eigen-pH-Werte aber nur von rund 3 bis < 5 auf.

Organosilane sind keine Protonen- oder Lewissäuren im herkömmlichen Sinne, doch wird im Kontakt mit Wasser in der wäßrigen Phase eine Acidifizierung bewirkt. Der Grad der Acidifizierung kann durch pH-Wert-Messung nach bekannten Verfahren bestimmt werden. Definitionsgemäß wird der im Wasser gemessene pH-Wert dem Organosilan zugeordnet.

Eine Erhöhung des pH-Wertes von Acryloxypropylalkoxysilanen durch Zusatz alkalisierender Verbindungen wie Alkali- oder Erdalkalihydroxide oder Alkali- oder Erdalkalialkoholate ist zwar möglich, doch sind solche Mischungen nicht lagerstabil, und es erfolgt nach kurzer Zeit eine rasche Spaltung der Acrylesterbindung *(G. Possmy u. G. Körner, Makromolekulare Chem. 73 (1964), S. 85 - 108).* Die Spaltung erfolgt besonders leicht in Gegenwart von protonenliefernden Lösungsmitteln, wie z. B. Alkoholen oder Wasser.

Der Erfindung liegt die Aufgabe zugrunde, Acryloxypropylalkoxysilane bereitzustellen, die einen höheren pH-Wert als den Eigen-pH-Wert aufweisen und lagerstabil sind.

Überraschenderweise wurde nun gefunden, daß Acryloxypropylalkoxysilane, die tertiäre Amine enthalten, einen höheren pH-Wert als den Eigen-pH-Wert aufweisen und hervorragend lagerstabil sind. Eine rasche Spaltung der Acrylesterbindung erfolgt hier auch in Gegenwart protonenliefernder Lösungsmittel nicht. Darüber hinaus wird die seitens der Lack- und Farbenindustrie geforderten Farbspezifikation von den erfindungsgemäßen Acryloxypropylalkoxysilanen hervorragend eingehalten.

Gegenstand der vorliegenden Erfindung ist daher ein Verfahren zur Herstellung einer lagerstabilen Zusammensetzung, enthaltend ein oder mehrere Acryloxypropylalkoxysilane der folgenden allgemeinen Formel 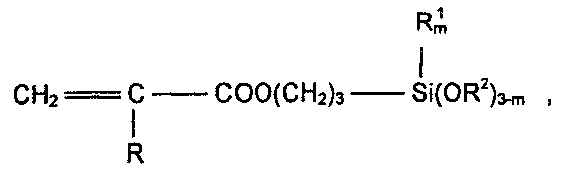 wobei R¹ und R² gleiche oder verschiedene Alkylgruppen mit 1 bis 4 C-Atomen sind, m gleich 0 oder 1 oder 2 und R ein Wasserstoff oder eine Methylgruppe ist, das dadurch gekennzeichnet ist,
dass den Acryloxypropylalkoxysitanen ein oder mehrere tertiäre Amine zugegeben werden. In der vorliegenden Patentanmeldung wurden erfindungsgemäße Zusammensetzungen auch als erfindungsgemäße Acryloxypropylalkoxysilane bezeichnet.

Zu bevorzugen sind hier tertiäre Amine, die einen pK_{B}-Wert zwischen 3 und 5 besitzen. Die Definition des pK_{B}-Wertes kann u. a. dem *"Lehrbuch der Organischen Chemie*" *(1954)*, *Seite 233, L. F. Fieser und M. Fieser,* entnommen werden. Ferner weisen die erfindungsgemäßen Acryloxypropylalkoxysilane vorzugsweise einen pH-Wert > 3 bis < 7, besonders vorzugsweise einen pH-Wert von ≥ 5 bis < 7 und ganz besonders vorzugsweise einen pH-Wert von ≥ 5 bis ≤ 6 auf. Die erfindungsgemäßen Acryloxypropylalkoxysilane können geeigneterweise tertiäre Amine in Mengen von 10 bis 500 Gew.-ppm enthalten. Insbesondere ist unter den erfindungsgemäßen Acryloxypropylalkoxysilanen das 3-Methacryloxypropyltrimethoxysilan hervorzuheben.

Gegenstand der vorliegenden Erfindung ist ferner eine Zusammensetzung, die nach dem erfindungsgemäßen Verfahren erhältlich ist.

Vorzugsweise stellt man den pH-Wert der Acryloxypropylalkoxysilane durch Zugabe mindestens eines tertiären Amins auf > 3 bis < 7, besonders vorzugsweise auf ≥ 5 bis < 7 und ganz besonders vorzugsweise auf ≥ 5 bis ≤ 6 ein. Die pH-Einstellung erfolgt geeigneterweise in der Art, daß ausgehend von dem Eigen-pH-Wert des jeweiligen Acryloxypropylalkoxysilans die Zugabe mindestens eines tertiären Amins unter Rühren erfolgt. Geeigneterweise kann man den Acryloxypropylalkoxysilanen mindestens ein tertiäres Amin in einer Menge von 10 bis 500 Gew.-ppm zusetzen.

Vorzugsweise setzt man den Acryloxypropylalkoxysilanen mindestens ein tertiäres Amin mit einem pK_{B}-Wert zwischen 3 und 5 zu, man kann aber auch mehr als ein tertiäres Amin zusetzen.

Die tertiären Amine treten, anders als primäre oder sekundäre Amine, im wasserfreien Gemisch mit den Doppelbindungen von Acryloxypropylalkoxysilanen nicht in Reaktion. Man kann sowohl tertiäre Mono-, Di- oder Triamine einsetzen.

Erfindungsgemäß einsetzbare tertiäre Monoamine sind z. B.:

| | | |
|---|---|---|
| Triethylamin | Tri-2-ethylhexylamin | N-Methylditridecylamin |
| Tripropylamin | N.N-Dimethylethylamin | Dimethylcyclohexylamin |
| Tributylamin | N.N-Dimethylisopropylamin | |
| Trioctylamin | N.N-Dimethylisobutylamin | |
| Diethyloctylamin | N.N-Dimethyl-2-ethylhexylamin | |
| Trusobutylamin | | |

Erfindungsgemäß einsetzbare tertiäre Diamine sind z. B.:
Bis-dimethylaminomethan
N.N.N'.N'-Tetramethylethylendiamin
N.N.N'.N'-Tetramethyl-1.3-diaminopropan

Ein erfindungsgemäß einsetzbares tertiäres Triamin ist z. B.:
N.N.N'.N".N."-Pentamethyldiethylentriamin

Die genannten Amine können für sich allein oder in Gemischen verwendet werden. Auch können die erfindungsgemäßen Acryloxypropylalkoxysilane als Gemisch vorliegen.

Gegenstand der vorliegenden Erfindung ist darüber hinaus die Verwendung einer erfindungsgemäßen Zusammensetzung für die Herstellung siliciumhaltiger Lacke und Farben.

Gegenstand der vorliegenden Erfindung sind auch siliciumhaltige Lacke und Farben, die eine erfindungsgemäße Zusammensetzung sowie Polymere and/oder Copolymere der darin enthaltenen Acryloxypropylalkoxysilane enthalten.

In Tabelle 1 ist der pH-Wert für 3-Methacryloxypropyl-trimethoxysilan sowie die pH-Werte nach Zugabe unterschiedlicher Mengen Tributylamin angegeben; hier kann beispielhaft die hervorragende Wirkungsweise der Erfindung veranschaulicht werden. Ein weiterer Vorteil der vorliegenden Erfindung ist es auch, daß im pH-Bereich, hier speziell zwischen 4,4 und 6,2, praktisch ein linearer Zusammenhang zwischen der pH-Wertänderung und der dem Acryloxypropylalkoxysilan zugesetzten Menge an tertiären Aminen besteht. Somit ist es möglich, für eine angestrebte pH-Werteinstellung die erforderliche Menge an tertiären Aminen in einfacher Weise im voraus abzuschätzen.

Die Erfindung wird durch die folgenden Beispiele näher erläutert:

### Beispiel 1

a) Bestimmung des pH-Wertes in handelsüblichem 3-Methacryloxypropyltrimethoxysilan:
   Zu 3 Gewichtsteilen bidestilliertem Wasser wurden unter Rühren mit einem Magnetrührer 2 Gewichtsteile DYNASYLAN MEMO-E (Handelsprodukt der Fa. Hüls AG) in "einem Schuß" zugesetzt und 10 Minuten bei Raumtemperatur innig durchmischt.
   Nach Abschaltung der Rührung und 30minütigem Stehen wurde in der oberen, wäßrigen Phase der pH-Wert mittels pH-Einstabmeßkette (Typ: N 1042 A mit integriertem Temperaturfühler Pt 100 der Fa. Schott) und pH-Meßgerät (Typ: Mikroprozessor-pH-Meter CG 832 der Fa. Schott) bestimmt. So wurde ein pH-Wert von 4,4 ermittelt.
b) Ermittlung des pH-Wertes in Abhängigkeit von der Aminkonzentration:
   In handelsübliches 3-Methacryloxypropyl-trimethoxysilan (DYNASYLAN MEMO-E) wurden definierte Mengen Tributylamin ("purum" von Fa. Fluka, Reinheit > 98 % (GC)) eingewogen und in der unter a) genannten Weise der pH-Wert bestimmt (s. Tabelle 1).
   Das erfindungsgemäße 3-Methacryloxypropyl-trimethoxysilan weist für alle eingestellten pH-Werte eine Lagerstabilität von mehr als 6 Monaten auf.

### Beispiel 2

Es wurde wie in Beispiel 1 verfahren, jedoch daß anstelle von 3-Methacryloxypropyl-trimethoxysilan die Verbindung 3-Acryloxypropyl-triethoxysilan mit dem Eigen-pH-Wert 4,8 und anstelle von Tributylamin die Verbindung Diethyloctylamin verwendet wurde. Nach Zusatz von 179 Gew.-ppm Diethyloctylamin wurde ein pH-Wert von 5,8 ermittelt.
Das erfindungsgemäße 3-Acryloxypropyl-triethoxysilan weist für alle eingestellten pH-Werte eine Lagerstabilität von ebenfalls mehr als 6 Monaten auf.

### Beispiel 3

Es wurde wie in Beispiel 1 verfahren, jedoch daß anstelle von 3-Methacryloxypropyl-trimethoxysilan die Verbindung 3-Methacryloxypropylmethyldimethoxysilan mit dem Eigen-pH-Wert 4,5 verwendet wurde.
Nach Zusatz von 249 Gew.-ppm Tributylamin wurde ein pH-Wert von 6,0 gemessen.
Auch hier beträgt die Lagerstabilität für das erfindungsgemäße 3-Methacryloxypropyl-methyldimethoxysilan mehr als 6 Monate.

**Tabelle 1:**

| pH-Werte von 3-Methacryloxypropyl-trimethoxysilan vor und nach Zugabe unterschiedlicher Mengen von Tributylamin | |
|---|---|
| **3-Methacryloxypropyl-trimethoxysilan** | |
| Tributylamin-Gehalt [Gew.-ppm] | pH-Wert |
| 0 | 4,4 |
| 25 | 4,6 |
| 50 | 4,7 |
| 75 | 4,8 |
| 100 | 5,0 |
| 150 | 5,3 |
| 200 | 5,6 |
| 300 | 6,2 |
| 400 | 6,5 |

## Patentansprüche

1. Verfahren zur Herstellung einer lagerstabilen Zusammensetzung, enthaltend ein oder mehrere Acryloxypropylalkoxysilane der folgenden allgemeinen Formel 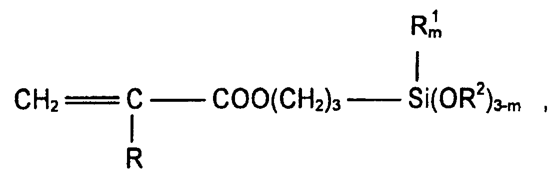 wobei R¹ und R² gleiche oder verschiedene Alkylgruppen mit 1 bis 4 C-Atomen sind, m gleich 0 oder 1 oder 2 und R ein Wasserstoff oder eine Methylgruppe ist,
**dadurch gekennzeichnet,**
**dass** den Acryloxypropylalkoxysilanen ein oder mehrere tertiäre Amine zugegeben werden.

2. Verfahren nach Anspruch 1,
**dadurch gekennzeichnet,**
**dass** man den pH-Wert der Zusammensetzung durch Zugabe von einem oder mehreren tertiären Aminen auf > 3 bis < 7 einstellt.

3. Verfahren nach Anspruch 2,
**dadurch gekennzeichnet,**
**dass** man den pH-Wert der Zusammensetzung durch Zugabe von einem oder mehreren tertiären Aminen auf ≥ 5 bis < 7 einstellt.

4. Verfahren nach Anspruch 3,
**dadurch gekennzeichnet,**
**dass** man den pH-Wert der Zusammensetzung durch Zugabe von einem oder mehreren tertiären Aminen auf ≥ 5 bis ≤ 6 einstellt.

5. Verfahren nach den Ansprüchen 1 bis 4,
**dadurch gekennzeichnet,**
**dass** man den Acryloxypropylalkoxysilanen ein oder mehrere tertiäre Amine mit einem pK_{B}-Wert zwischen 3 und 5 zusetzt..

6. Verfahren nach den Ansprüchen 1 bis 5,
**dadurch gekennzeichnet,**
**dass** man den Acryloxypropylalkoxysilanen mindestens ein tertiäres Amin in einer Menge von 10 bis 500 Gew.-ppm zusetzt.

7. Zusammensetzung, erhältlich nach einem Verfahren gemäß einem der Ansprüche 1 bis 6.

8. Zusammensetzung nach Anspruch 7,
**dadurch gekennzeichnet,**
**dass** das Acryloxypropylalkoxysilan 3-Methacryloxypropyltrimethoxysilan ist.

9. Zusammensetzung nach einem der Ansprüche 7 oder 8,
**dadurch gekennzeichnet,**
**dass** sie einen pH-Wert von > 3 bis < 7 aufweist.

10. Zusammensetzung nach Anspruch 9,
**dadurch gekennzeichnet,**
**dass** sie einen pH-Wert von ≥ 5 bis < 7 aufweist.

11. Zusammensetzung nach Anspruch 10,
**dadurch gekennzeichnet,**
**dass** sie einen pH-Wert von ≥ 5 bis ≤ 6 einstellt.

12. Zusammensetzung nach den Ansprüchen 7 bis 11,
**dadurch gekennzeichnet,**
**dass** die tertiären Amine einen pK_{B}-Wert zwischen 3 und 5 besitzen.

13. Zusammensetzung nach den Ansprüchen 7 bis 12,
**dadurch gekennzeichnet,**
**dass** sie tertiäre Amine in Mengen von 10 bis 500 Gew.-ppm enthält.

14. Verwendung einer Zusammensetzung nach den Ansprüchen 7 bis 13 für die Herstellung siliciumhaltiger Lacke und Farben.

15. Siliciumhaltige Lacke und Farben, die eine Zusammensetzung nach den Ansprüchen 7 bis 13 sowie Polymere und/oder Copolymere der darin enthaltenen Acryloxypropylalkoxysilane enthalten.

16. Siliciumhaltige Lacke und Farben, die eine Zusammensetzung nach den Ansprüchen 7 bis 13 und/oder Polymere und/oder Copolymere der darin enthaltenen Acryloxypropylalkoxysilane und das tertiäre Amin in einer Menge von 10 bis 500 Gew.-ppm, bezogen auf die Acryloxypropylalkoxysilane, enthalten.

## Claims

1. A process for preparing a storage-stable composition comprising one or more acryloyloxypropylalkoxysilanes of the general formula 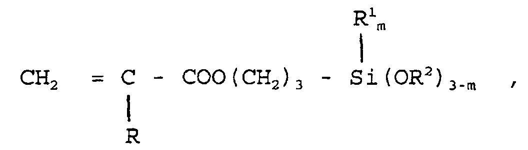 in which R¹ and R² are identical or different alkyl groups having 1 to 4 carbon atoms, m is 0 or 1 or 2 and R is hydrogen or a methyl group, **characterised in that** one or more tertiary amines are added to the acryloyloxypropylalkoxysilanes.

2. A process according to claim 1, **characterised in that** the pH of the composition is set at from > 3 to < 7 by addition of one or more tertiary amines.

3. A process according to claim 2, **characterised in that** the pH of the composition is set at from ≥ 5 to < 7 by addition of one or more tertiary amines.

4. A process according to claim 3, **characterised in that** the pH of the composition is set at from ≥ 5 to ≤ 6 by addition of one or more tertiary amines.

5. A process according to any of claims 1 to 4, **characterized in that** one or more tertiary amines having a pK_{b} of from 3 to 5 are added to the acryloyloxypropylalkoxysilanes.

6. A process according to any of claims 1 to 5, **characterized in that** at least one tertiary amine is added to the acryloyloxypropylalkoxysilanes in a quantity of from 10 to 500 ppm by weight.

7. A composition obtainable by a process according to any one of claims 1 to 6.

8. A composition according to claim 7, **characterized in that** the acryloyloxypropylalkoxysilane is 3-methacryloyloxypropyltrimethoxysilane.

9. A composition according to either of claims 7 and 8, **characterized in that** it has a pH of from > 3 to < 7.

10. A composition according to claim 9, **characterized in that** it has a pH of from ≥ 5 to < 7.

11. A composition according to claim 10, **characterized in that** it establishes a pH of from ≥ 5 to ≤ 6.

12. A composition according to any of claims 7 to 11, **characterized in that** the tertiary amines have a pK_{b} of from 3 to 5.

13. A composition according to any of claims 7 to 12, **characterized in that** it contains tertiary amines in quantities of from 10 to 500 ppm by weight.

14. Use of a composition according to any of claims 7 to 13 for the production of silicon-containing coating materials and paints.

15. A silicon-containing coating material or paint which comprises a composition according tc any of claims 7 to 13 and polymers and/or copolymers of the acryloyloxypropylalkoxysilanes present therein.

16. A silicon-containing coating material or paint which comprises a composition according to any of claims 7 to 13 and/or polymers and/or copolymers of the acryloyloxypropylalkoxysilanes present therein, and the tertiary amine in a quantity of from 10 to 500 ppm by weight, based on the acryloyloxypropylalkoxysilanes.

## Revendications

1. Procédé de préparation d'une composition stable au stockage contenant un ou plusieurs acryloxypropylalkoxysilanes de formule générale suivante : 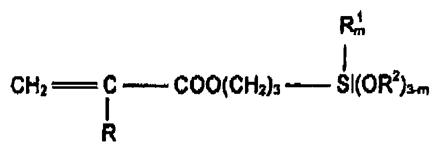 dans laquelle R¹ et R² sont des groupes alkyle identiques ou différents, ayant de 1 à 4 atomes de carbone, m est égal à 0, ou 1 ou 2, et R est un hydrogène ou un groupe méthyle,
**caractérisé en ce qu'**
on ajoute aux acryloxypropylalkoxysilanes une ou plusieurs amines tertiaires.

2. Procédé selon la revendication 1,
**caractérisé en ce que**
par addition d'une ou plusieurs aminés tertiaires on ajuste la valeur du pH de la composition entre > 3 et < 7.

3. Procédé selon la revendication 2,
**caractérisé en ce que**
par addition d'une ou plusieurs amines tertiaires on ajuste la valeur du pH de la composition entre ≥ 5 et< 7.

4. Procédé selon la revendication 3,
**caractérisé en ce que**
par addition d'une ou plusieurs amines tertiaires on ajuste la valeur du pH de la composition entre ≥ 5 et ≤ 6.

5. Procédé selon l'une quelconque des revendications 1 à 4,
**caractérisé en ce qu'**
aux acryloxypropylalkoxysilanes, on ajoute une ou plusieurs amines tertiaires ayant une valeur de pK_{B} comprise entre 3 et 5.

6. Procédé selon l'une quelconque des revendications 1 à 5,
**caractérisé en ce qu'**
on ajoute aux acryloxypropylalkoxysilanes au moins une amine tertiaire en une quantité allant de 10 à 500 ppm en poids.

7. Composition accessible selon un procédé conformément à l'une quelconque des revendications 1 à 6.

8. Composition selon la revendication 7,
**caractérisée en ce que**
l'acryloxypropylalkoxysilane est le 3-méthacryloxypropyltriméthoxysilane.

9. Composition selon l'une quelconque des revendications 7 ou 8,
**caractérisée en ce qu'**
elle possède une valeur de pH allant de > 3 à < 7.

10. Composition selon la revendication 9,
**caractérisée en ce qu'**
elle possède une valeur de pH allant de ≥ 5 à < 7.

11. Composition selon la revendication 10,
**caractérisée en ce qu'**
elle ajuste une valeur de pH ≥ 5 à ≤ 6.

12. Composition selon l'une quelconque des revendications 7 à 11,
**caractérisée en ce que**
les amines tertiaires possèdent une valeur de pK_{B} comprise entre 3 et 5.

13. Composition selon l'une quelconque des revendications 7 à 12,
**caractérisée en ce qu'**
elle contient des amines tertiaires en des quantités allant de 10 à 500 ppm en poids.

14. Utilisation d'une composition selon l'une quelconque des revendications 7 à 13 pour la production de laques et de couleurs contenant du silicium.

15. Laques et couleurs contenant du silicium qui renferment une composition selon les revendications 7 à 13 ainsi que des polymères et/ou des copolymères des acryloxypropylalkoxysilanes qui y sont contenus.

16. Laques et couleurs contenant du silicium qui renferment une composition selon l'une quelconque des revendications 7 à 13 et/ou des polymères et/ou des copolymères des acryloxypropylalkoxysilanes qui y sont contenus et l'amine tertiaire en une quantité allant de 10 à 500 ppm en poids, rapporté aux acryloxypropylalkoxysilanes.
